# EUROPÄISCHE PATENTSCHRIFT

(11) **EP 1 423 342 B1**
(45) Veröffentlichungstag und Bekanntmachung des Hinweises auf die Patenterteilung: **24.05.2006**
(21) Anmeldenummer: 02743157.6
(22) Anmeldetag: 06.06.2002
(51) Int. Cl.: C03B 9/40, C03B 9/193, C03B 9/16

(54) **VERFAHREN UND VORRICHTUNG ZUM ABTRANSPORT VON GLASBEHÄLTERN AUS EINER GLASFORMMASCHINE**
METHOD AND DEVICE FOR TRANSPORTING GLASS CONTAINERS AT THE OUTPUT OF A GLASS MOULDING MACHINE
PROCEDE ET DISPOSITIF DE TRANSPORT DE RECIPIENTS EN VERRE A LA SORTIE D'UNE MACHINE DE MOULAGE DU VERRE

(30) Priorität: 24.08.2001 DE 10141540
(43) Veröffentlichungstag der Anmeldung: 02.06.2004
(73) Patentinhaber: Heye International GmbH, 31683 Obernkirchen (DE)
(72) Erfinder: KRUMME, Manfred, 32457 Porta Westfalica (DE)
(74) Vertreter: Sobisch, Peter
(86) Internationale Anmeldenummer: PCT/EP2002/006197
(87) Internationale Veröffentlichungsnummer: WO 2003/018490

(56) Entgegenhaltungen:
- EP-A- 0 059 572
- US-A- 4 694 158
- PATENT ABSTRACTS OF JAPAN vol. 1997, no. 04, 30. April 1997 (1997-04-30) & JP 08 319123 A (YAMAMURA GLASS CO LTD), 3. Dezember 1996 (1996-12-03)

## Beschreibung

Die Erfindung betrifft ein Verfahren nach dem Oberbegriff des Anspruchs 1 und eine Vorrichtung nach dem Oberbegriff des Anspruchs 7.

Bei einem bekannten Verfahren dieser Art (JP 8-319123 A) ist auf jede Absetzstelle ein Infrarotsensor ausgerichtet. Jeder Infrarotsensor ist auf einer seitlichen Konsole der Absetzplatte oberhalb der Absetzplatte und gegenüber einem Überschiebermechanismus angeordnet. Die Infrarotsensoren sind an diesem Anbauort hohen Temperaturen und Verschmutzungen ausgesetzt. Die Verschmutzungen bestehen aus einer dicken Schmutzschicht aufgrund kondensierenden Schmiermittels, mit dem die Formwerkzeuge periodisch geschmiert werden. Diese Schmiermittelrückstände verbrennen teilweise und verkrusten die Glasformmaschine und zwangsläufig auch die Infrarotsensoren an ihrem bekannten Anbauort. Hinzu kommen Leckmengen der Mineralöle, mit denen die Mechanismen der Glasformmaschine laufend geschmiert werden. Diese Leckmengen werden durch die allgegenwärtige Druckluft herumgeschleudert und treffen auch die bekannten Infrarotsensoren. Ferner besteht für die bekannten Infrarotsensoren akute Gefahr mechanischer Zerstörung durch Glasstau fehlerhafter Glasbehälter im Bereich der Absetzplatte. Solche Glasstaus werden mit grobem Werkzeug von Hand aus dem Bereich der Absetzplatte weggerissen. Dabei werden die bekannten Infrarotsensoren unvermeidlich vernichtet.

Aus der EP 0 059 572 A1 ist es an sich bekannt, einen Optikkopf im Bereich eines Ausnehmers anzuordnen. Der Optikkopf überwacht, ob in jedem Arbeitsspiel drei Hohlglasgegenstände durch den Ausnehmer aus einer Fertigformstation auf eine Absetzplatte transportiert werden. Der Optikkopf ist über einen Faseroptiklichtleiter mit einem infrarotempfindlichen elektrischen Schalter und dieser über eine elektrische Leitung mit einer Auswerteschaltung verbunden. Diese Anordnung ist aufwändig und ist dennoch in der Sicherheit der Erkennung der Hohlglasgegenstände begrenzt.

Aus der US 4 694 158 A ist es an sich bekannt, auf einem Transportband stehende Hohlglasbehälter zu vermessen. Dazu wird jeder Hohlglasbehälter mit einer Lichtquelle angestrahlt. Das durch den Hohlglasbehälter hindurchgetretene Licht wird durch einen optischen Sensor mit einer Photodiodenzeile aufgefangen. Die resultierenden elektrischen Signale werden ausgewertet.

Der Erfindung liegt die Aufgabe zugrunde, Funktion und Lebensdauer der Sensoren zu verbessern.

Diese Aufgabe ist hinsichtlich des Verfahrens durch die Merkmale des Anspruchs 1 gelöst. Auf diese Weise sind die Sensoren den schädlichen Einflüssen des Maschinenbetriebs weitgehend entzogen und geschützt untergebracht.

Gemäß Anspruch 2 oder 3 werden anomale Betriebszustände sehr frühzeitig erkannt und können besonders schnell behoben werden.

Die Sensoren gemäß Anspruch 4 oder 5 werden je nach dem Einsatzfall ausgewählt.

Gemäß Anspruch 6 kann das Sensorsignal in regelmäßiger zeitlicher Abfolge digitalisiert und in digitaler Form ausgewertet werden. So kann schnell und sicher die Steuerung der Glasformmaschine so beeinflusst werden, dass der Anlass für den anomalen Maschinenbetrieb beseitigt werden kann.

Die zugrunde liegende Aufgabe ist hinsichtlich der Vorrichtung durch die Merkmale des Anspruchs 7 gelöst. Hier ergeben sich die gleichen Vorteile wie zu Anspruch 1 erwähnt.

Gemäß Anspruch 8 oder 12 können die Sensoren nach dem jeweiligen Einsatzfall ausgewählt werden.

Durch die Merkmale des Anspruchs 9 sind die Sensoren besonders gut geschützt untergebracht.

Gemäß Anspruch 10 ergibt sich der besondere Vorteil, dass die Sensoren durch die für die Absetzstelle bestimmte Kühlluft gekühlt werden. Damit kann sich das in diesem Maschinenbereich vorherrschende hohe Temperaturniveau nicht mehr schädlich auf die Sensoren auswirken.

Gemäß Anspruch 11 ergibt sich eine einfache Abstützung der Sensoren und die Möglichkeit, die Sensoren bei Bedarf leicht und schnell auswechseln zu können.

Durch die Merkmale des Anspruchs 13 sind die Sensoren hinreichend geschützt angeordnet.

Die Merkmale jedes der Ansprüche 14 bis 16 dienen dem leichten und schnellen Austausch der Sensoren.

Gemäß Anspruch 17 ergibt sich der zusätzliche Vorteil, dass die Sensoren durch die für die Absetzstelle bestimmte Kühlluft mit gekühlt werden. Dadurch sind die Sensoren auch in diesem Fall dem hohen Temperaturniveau in diesem Maschinenbereich entzogen.

Mit den Merkmalen des Anspruchs 18 ist eine gezielte und besonders intensive Kühlung der Sensoren ermöglicht.

Die Merkmale jedes der Ansprüche 19 bis 21 bieten schaltungstechnische Vorteile zur schnellen und sicheren Erkennung und Abstellung anomaler Betriebszustände.

Diese und weitere Merkmale und Vorteile der Erfindung werden nachfolgend anhand der in den Zeichnungen dargestellten Ausführungsbeispiele näher erläutert. Es zeigt .
Fig. 1 einen Längsschnitt durch den Bereich einer Absetzplatte einer Sektion einer I.S.-Glasformmaschine mit Verwendung von Fototransistoren als Sensoren,
Fig. 2 ein Detail aus Fig. 1 in vergrößerter Darstellung,
Fig. 3 eine Schaltung für die Sensoren gemäß Fig. 1 und 2,
Fig. 4 den Signalverlauf der digitalisierten Spannung der Schaltung gemäß Fig. 3,
Fig. 5 einen Längsschnitt entsprechend Fig. 1 durch eine andere Ausführungsform mit Thermoelementen als Sensoren,
Fig. 6 ein Detail aus Fig. 5 in vergrößerter Darstellung und im Längsschnitt,
Fig. 7 eine Schaltung für die Sensoren gemäß Fig. 5 und 6 und
Fig. 8 den Signalverlauf der gemäß Fig. 7 verstärkten und digitalisierten Thermospannung.

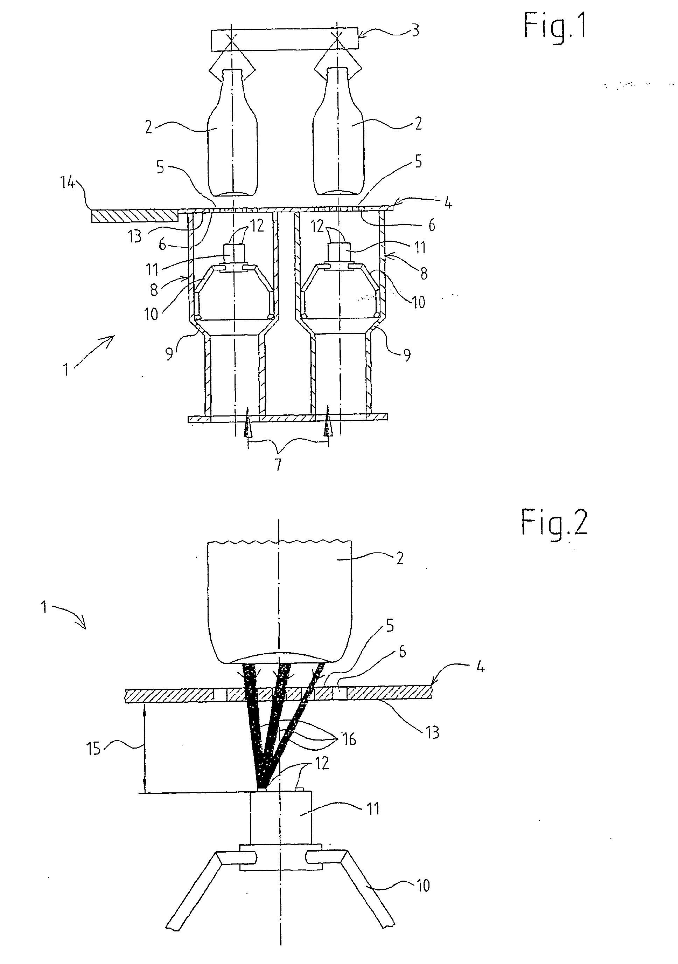

Fig. 1 zeigt eine Vorrichtung 1 zum Abtransport von Glasbehältern 2 aus einer nicht weiter gezeichneten Glasformmaschine, z.B. einer Sektion einer I.S.-Glasformmaschine, die im Doppeltropfenbetrieb arbeitet, also in jedem Betriebszyklus zwei Glasbehälter 2 herstellt. Aus der Fertigformstation der Sektion werden die Glasbehälter durch einen in Fig. 1 nur schematisch angedeuteten Ausnehmermechanismus 3 entnommen und über eine stationäre Absetzplatte 4 transportiert. Die Absetzplatte 4 weist unter jedem zugelieferten Glasbehälter 2 eine Absetzstelle 5 auf, die von Kühlluftbohrungen 6 durchdrungen ist.

Den Kühlluftbohrungen 6 wird Kühlluft in Richtung von Pfeilen 7 durch senkrechte Kanäle 8 zugeführt, die in einer Übergangszone 9 nach oben hin erweitert sind.

Im Inneren jedes Kanals 8 ist auf der Übergangszone 9 ein federnde Drahtbügel aufweisender Halter 10 für einen Tragkörper 11 abgestützt. An jedem Tragkörper 11 sind in diesem Fall mehrere als Fototransistoren ausgebildete Sensoren 12 so befestigt, dass sie einer Unterseite 13 der Absetzplatte 4 zugewandt sind.

Die Glasbehälter 2 können durch den Ausnehmermechanismus 3 zunächst so herantransportiert werden, dass, wie in Fig. 1 gezeichnet, die Glasbehälter 2 in einem geringen Abstand oberhalb der Absetzplatte 4 hängen. Bei eingeschalteter Kühlluft 7 werden dann die Böden der Glasbehälter 2 so weit verfestigt, dass die Glasbehälter 2 durch den Ausnehmermechanismus 3 ohne Verformungsgefahr auf den Absetzstellen 5 abgesetzt werden können. Von dort werden die Glasbehälter 2 in an sich bekannter Weise z.B. durch einen Überschiebermechanismus auf ein allen Sektionen der I.S.-Glasformmaschine gemeinsames Transportband 14 übergeschoben.

Fig. 2 verdeutlicht, dass die Sensoren 12 in einem Abstand 15 unterhalb der Unterseite 13 der Absetzplatte 4 besonders geschützt angeordnet sind. Elektromagnetische Strahlung 16 geht von dem noch heißen Glasbehälter 2 aus, durchdringt Kühlluftbohrungen 6 und wird von dem in Fig. 2 linken Sensor 12 empfangen. Der in Fig. 2 rechte Sensor 12 empfängt elektromagnetische Strahlung 16 in der gleichen Weise. Insgesamt sind z.B. drei solche Sensoren 12 an dem Tragkörper 11 befestigt. Die elektrischen Kabel der Sensoren 12 sind zur Vereinfachung nicht dargestellt.

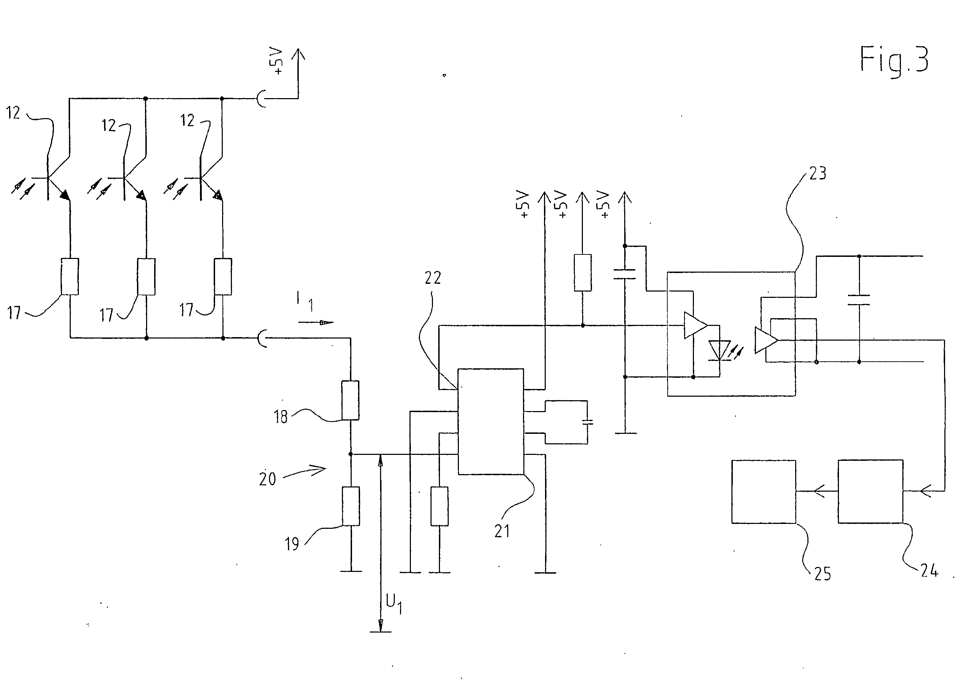

In Fig. 3 sind diese drei als Fototransistoren ausgebildeten Sensoren 12 jeweils mit einem Widerstand 17 in Reihe und miteinander parallelgeschaltet. Dazu ist ein Widerstände 18 und 19 aufweisender Spannungsteiler 20 in Reihe geschaltet. Der Spannungsteiler 20 dient zur Anpassung an den Eingangsspannungsbereich eines Spannungs/Frequenzwandlers 21. Der Strom I₁ und damit die Eingangsspannung U₁ des Spannungs/Frequenzwandlers 21 ist von der auf die Fototransistoren 12 einwirkenden Beleuchtungsstärke abhängig. Durch die Schaltungsanordnung gemäß Fig. 3 wird erreicht, dass bei einem Ausfall, z.B. durch Verschmutzung, eines Fototransistors 12 dennoch eine Beleuchtungsstärkenabhängigkeit des Stromes I₁ erhalten bleibt. Ein Ausgang 22 des Spannungs/Frequenzwandlers 21 ist über einen Optokoppler 23 mit einer als Mikrokontroller ausgebildeten elektrischen Steuerung 24 verbunden. Die elektrische Steuerung 24 nimmt entweder unmittelbar oder mittelbar über die Steuerung der Glasformmaschine Einfluss auf eine oder mehrere korrigierende Mechanismen 25 der Glasformmaschine.

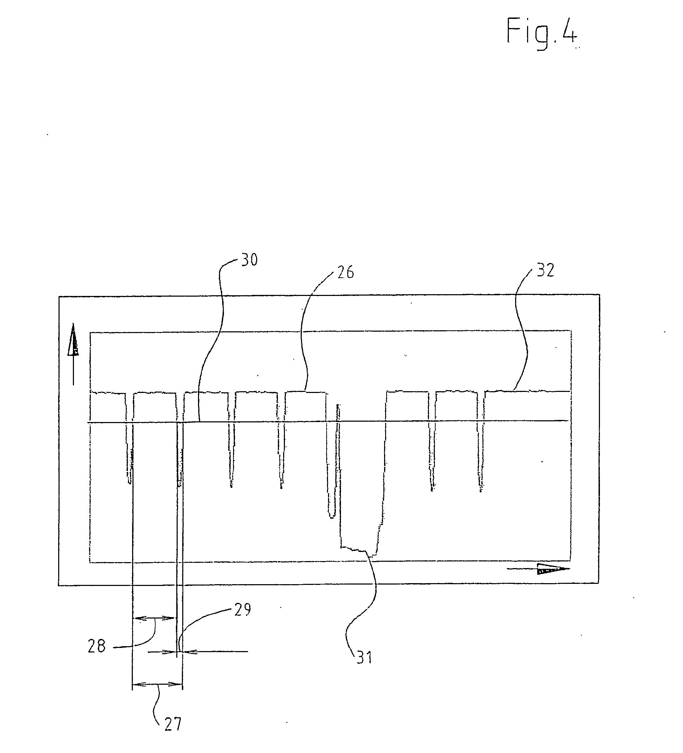

Mittels Mikrokontroller-Soflware erfolgt in konstanten Zeitabständen eine Frequenzmessung der Mikrokontroller-Eingangsspannung. Fig. 4 zeigt den softwareinternen Verlauf der Mikrokontroller-Eingangsfrequenz 26 über der Zeit. Darin weist jeder ungestörte Produktionszyklus 27 eine Beleuchtungsdauer 28 und eine Verdunkelungsdauer 29 auf. In der Beleuchtungsdauer 28 werden die Fototransistoren 12 durch einen Glasbehälter beleuchtet, d.h., mit elektromagnetischer Strahlung 16 (Fig. 2) bestrahlt. Dagegen befindet sich in der Verdunkelungsdauer 29 kein Glasbehälter 2 oberhalb der Absetzstelle 5 (Fig. 2).

Für die Mikrokontroller-Eingangsfrequenz 26 ist ein Schwellenwert 30 gesetzt.

In Fig. 4 sind zwei anomale Betriebszustände 31 und 32 zeichnerisch dargestellt.

In dem ersten fehlerhaften Betriebszustand 31 ist die Verdunkelungsdauer 29 signifikant länger als im ungestörten Produktionszyklus 27. Das bedeutet, dass in dem zugehörigen Produktionszyklus kein Glasbehälter 2 über die zugehörige Absetzstelle 5 gelangt ist. Dies kann u.a. darauf zurückzuführen sein, dass der betreffende Glasbehälter aus seiner Formstation nicht entformt werden konnte. Dann muss verhindert werden, dass der Glasformmaschine weitere Glastropfen zugeführt werden. Als Abhilfe können während der Betriebsstörung nachfolgende Glasposten in den Scherbenbunker abgeleitet werden. In diesem Fall wäre also der korrigierende Mechanismus 25 ein Tropfenabweiser bekannter Bauart. Sobald die Störung behoben ist, kann der Tropfenabweiser wieder ausgeschaltet und die Versorgung der Glasformmaschine mit Glastropfen wieder aufgenommen werden.

Der zweite fehlerhafte Betriebszustand 32 äußert sich gemäß Fig. 4 darin, dass die Beleuchtungsdauer 28 signifikant länger ist als bei dem ungestörten Produktionszyklus 27. Das ist darauf zurückzuführen, dass der Glasbehälter 2 nicht von der Absetzstelle 5 abtransportiert werden konnte. Auch in diesem Fall muss verhindert werden, dass weitere Glasbehälter 2 auf diese Absetzstelle 5 nachgeliefert werden. Vorzugsweise wird man also auch hier für die betreffende Sektion der I.S.-Glasformmaschine die Zufuhr weiterer Glastropfen unterbinden. Nach manueller Entfernung des Glasstaus auf der Absetzstelle 5 kann dann die Zufuhr von Glastropfen zu der Glasformmaschine wieder hergestellt und in den ungestörten Produktionszyklus 27 übergegangen werden.

Aus mehreren Signalverläufen während der ungestörten Produktionsphasen 27 wird jeweils eine mittlere Dauer der Beleuchtungsdauer 28 sowie der Verdunketungsdauer 29 bestimmt. Eine signifikante Abweichung davon wird als Zustandsinformation im Sinne des ersten Betriebszustands 31 oder des zweiten Betriebszustands 32 interpretiert. Die Zustandsinformation im Sinne des ersten Betriebszustands 31 wird mit der Zustandsinformation einer betriebsbedingten (gewollten) Unterbrechung der Zufuhr von Glastropfen zu der Glasformmaschine logisch verknüpft. So ist also jeder der ungewollten fehlerhaften Betriebszustände 31 oder 32 maschinell erkennbar.

In allen Zeichnungsfiguren sind gleiche Teile mit gleichen Bezugszahlen versehen.

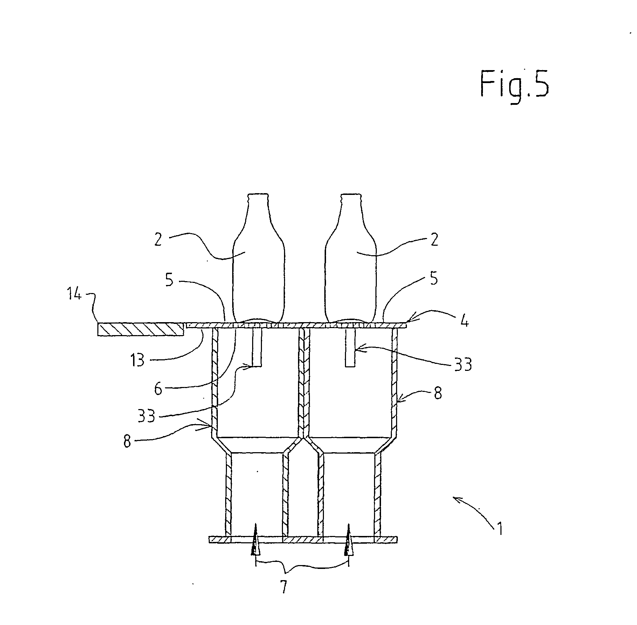

Bei dem Ausführungsbeispiel nach Fig. 5 hat der nicht gezeichnete Ausnehmermechanismus 3 (Fig. 1) die beiden Glasbehälter 2 schon auf den Absetzstellen 5 abgesetzt. Koaxial unter den Glasbehältern 2 ist an der Unterseite 13 der Absetzplatte 4 jeweils eine Sensorvorrichtung 33 angebracht. Die Sensorvorrichtungen 33 werden durch die Kühlluft 7 in ähnlicher Weise gekühlt, wie bei den Fig. 1 und 2 die Sensoren 12.

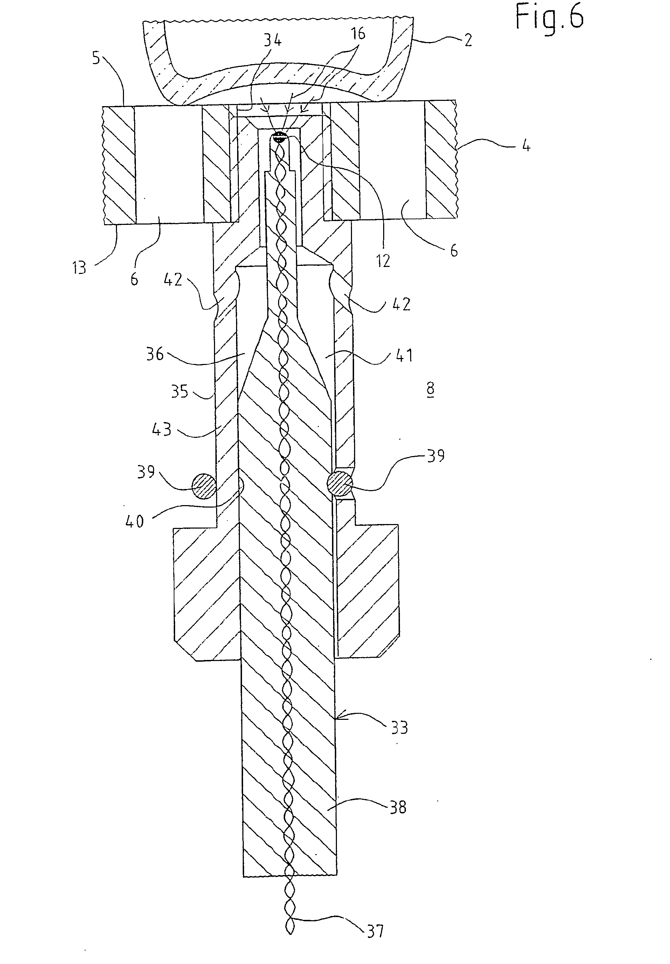

In Fig. 6 ist der Glasbehälter 2 stark verkleinert dargestellt. Der Sensor 12 ist als Thermoelement ausgebildet und in einer Gewindebohrung 34 der Absetzplatte 4 angeordnet. In die Gewindebohrung 34 ist von der Unterseite 13 der Absetzplatte 4 her ein Schraubstopfen 35 eingeschraubt. Der Schraubstopfen 35 weist eine axiale Durchbrechung 36 auf. In die Durchbrechung 36 ragt von unten her ein den Sensor 12 und seine Ausgleichsleitungen 37 tragender Tragstift 38 hinein. Der Tragstift 38 ist über eine Fixiervorrichtung 39, hier in Form einer Federdrahtklammer, in der Durchbrechung 36 positioniert und lösbar fixiert. Dazu greift die Fixiervorrichtung 39 in eine Umfangsnut 40 des Tragstifts 38 ein. Zwischen einem oberen Abschnitt des Tragstifts 38 und dem Schraubstopfen 35 besteht ein Ringraum 41. In den Ringraum 41 münden mehrere mit dem Kanal 8 verbundene Verbindungsöffnungen 42 in einer Wand 43 des Schraubstopfens 35. So kann Kühlluft aus dem Kanal 8 durch die Verbindungsöffnungen 42 hindurch in den Ringraum 41 gelangen. Diese Kühlluft streicht nach oben an dem Sensor 12 vorbei auf die Oberseite der Absetzplatte 4. Dadurch wird der Sensor 12 gezielt und intensiv gekühlt und vor thermischen Schäden geschützt.

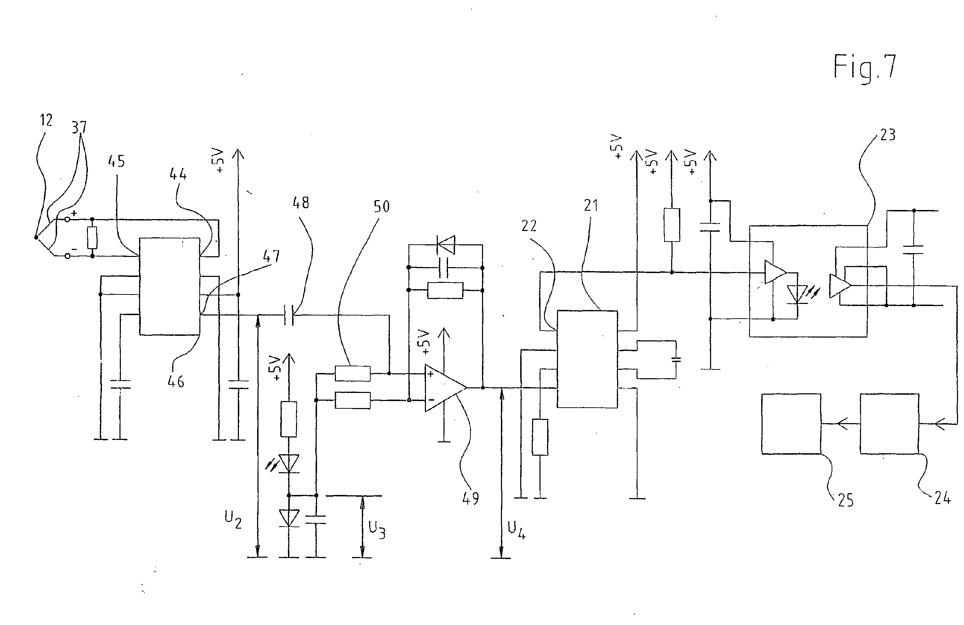

Fig. 7 zeigt eine Schaltung für einen als Thermoelement ausgebildeten Sensor 12 und seine Ausgleichsleitungen 37. Die Ausgleichsleitungen 37 sind mit Eingängen 44 und 45 eines Differenzverstärkers 46 verbunden. Ein Ausgang 47 des Differenzverstärkers 46 ist über einen Kondensator 48 mit einem Operationsverstärker 49 verbunden. Der durch die Absoluttemperatur am Thermoelement 12 zustande kommende Gleichspannungsanteil der Ausgangsspannung U₂ des Differenzverstärkers 46 wird über den Kondensator 48 abgetrennt, während der durch Temperaturänderungen an dem Thermoelement 12 verursachte Spannungsanteil von U₂ durch einen Widerstand 50 auf eine Konstantspannung U₃ bezogen und im Operationsverstärker 49 weiter verstärkt wird. Eine Ausgangsspannung U₄ des Operationsverstärkers 49 wird dem Spannungs/Frequenzwandler 21 zugeführt. Der Ausgang 22 des Spannungs/Frequenzwandlers 21 ist wiederum über den Optokoppler 23 mit der elektrischen Steuerung 24 verbunden. Da im Vergleich zur Absoluttemperatur nur verhältnismäßig kleine Temperaturänderungen an dem Thermoelement 12 zustande kommen, gestattet die in Fig. 7 dargestellte Schaltungsanordnung eine optimale, selbsttätig wirkende Anpassung an den Messbereich des Spannungs/Frequenzwandlers 21. Weiterhin nehmen bei dieser Schaltungsanordnung die die Absoluttemperatur beeinflussenden Produktionsparameter, wie z.B. die Behälterverweildauer auf der Absetzplatte 4, keinen störenden Einfluss. Zudem sind die Offsetfehler der beteiligten Verstärker vernachlässigbar.

Mittels Mikrokontroller-Software erfolgt in konstanten Zeitabständen eine Frequenzmessung der zuvor beschriebenen Mikrokontroller-Eingangsspannung.

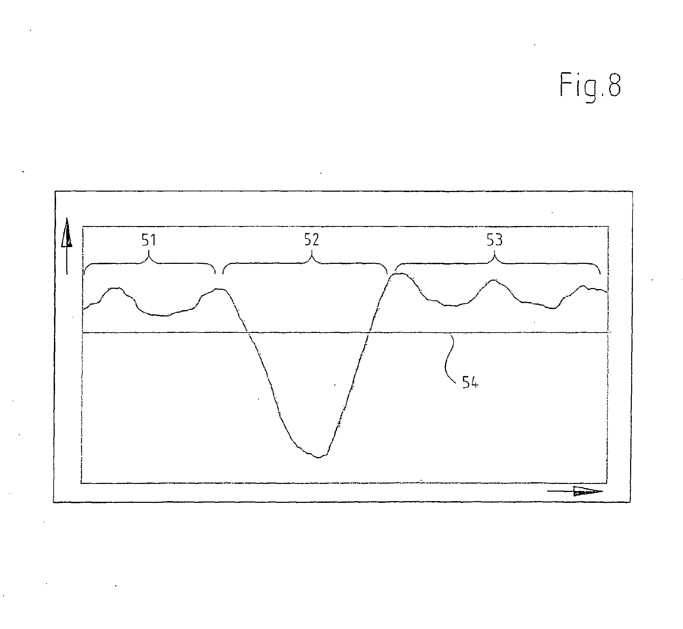

Fig. 8 zeigt den softwareinternen Mikrokontroller-Eingangsfrequenzverlauf über der Zeit. Darin sind in den Perioden 51 und 53 ungestörte Maschinenzyklen und in der Periode 52 ein Maschinenzyklus ohne Glasbehälter 2 auf der Absetzplatte 4 dargestellt. Der Signalverlauf eines ungestörten Produktionszyklus ist durch zwei Phasen gekennzeichnet. In einer ersten Phase erfolgt nach dem Ausnehmen und Transportieren des Glasbehälters auf die Absetzstelle 5 eine Aufheizung des Thermoelements 12 mit Signalzunahme aufgrund der Wärmestrahlung aus dem Bodenbereich des heißen Glasbehälters 2. In der zweiten Phase erfolgt während des Abtransports des Glasbehälters 2 von der Absetzplatte 4 eine Abkühlung mit Signalabnahme. Jedes betriebsbedingte Abschalten der Zufuhr von Glastropfen wird der Mikrokontrollereinheit übermittelt. Die danach durch das Ausbleiben der Glasbehälter 2 erfolgende Sensorsignalverringerurig wird zur Bestimmung einer Schaltschwelle 54 herangezogen. Im weiteren Produktionsverlauf ist dann durch Vergleich des Sensorsignals mit der Schaltschwelle 54 die An- oder Abwesenheit von Glasbehältern 2 als Boolscher Ausdruck detektierbar. Das Nichtvorhandensein von Glasbehältern 2 auf der Absetzplatte 4 kann durch betriebsbedingtes Unterbrechen der Zufuhr von Glastropfen oder durch Entformungs- oder Transportfehler verursacht sein. Nach logischer Verknüpfung mit dem zeitkorrelierten Zustand der betriebsbedingten Unterbrechung der Zufuhr von Glastropfen ist somit ein Entformungs-oder Transportfehler innerhalb der Glasformmaschine erkennbar.

## Patentansprüche

1. Verfahren zum Abtransport von Glasbehältern (2) aus einer Glasformmaschine, mit folgenden Schritten:
(a) Wenigstens ein Glasbehälter (2) wird in einer Formstation der Glasformmaschine fertiggestellt,
(b) der wenigstens eine Glasbehälter (2) wird durch einen Ausnehmermechanismus (3) aus der Formstation entnommen und auf einer von Kühlluftbohrungen (6) durchdrungenen Absetzstelle (5) einer Absetzplatte (4) abgesetzt,
(c) der wenigstens eine Glasbehälter (2) wird von der Absetzplatte (4) zum Weitertransport entfernt,
(d) jeder Absetzstelle (5) wird ein Sensor (12) zugeordnet, mit dem bei Anwesenheit eines Glasbehälters (2) auf der Absetzstelle (5) ein Anwesenheitssignal erzeugt wird und
(e) jeder Sensor (12) wird mit einer elektrischen Steuerung (24) verbunden, durch die bei durch die Sensoren (12) detektierter Anomalie korrigierende Maßnahmen in der Glasformmaschine gesteuert werden,
**dadurch gekennzeichnet, dass** an jeder Absetzstelle (5) wenigstens ein Sensor (12) unterhalb einer oberen, mit den Glasbehältern (2) in Berührung tretenden Fläche der Absetzstelle (5) angeordnet wird,
und dass von jedem Glasbehälter (2) ausgehende elektromagnetische Strahlung (16) in wenigstens eine Bohrung (6;34) in der Absetzplatte (4) eingeleitet und von dem wenigstens einen Sensor (12) empfangen wird.

2. Verfahren nach Anspruch 1,
**dadurch gekennzeichnet, dass** bei während eines Arbeitszyklus des Ausnehmermechanismus (3) ausbleibendem, normalerweise die Anwesenheit eines Glasbehälters (2) an der Absetzstelle (5) anzeigenden Anwesenheitssignal die Glasformmaschine durch die elektrische Steuerung (24) in einen geeigneten Korrekturzustand (vgl. 25) gesteuert wird.

3. Verfahren nach Anspruch 1,
**dadurch gekennzeichnet, dass** bei während eines Arbeitszyklus des Ausnehmermechanismus (3) länger als normal anstehendem, die Anwesenheit eines Glasbehälters (2) an der Absetzstelle (5) anzeigenden Anwesenheitssignal die Glasformmaschine durch die elektrische Steuerung (24) in einen geeigneten Korrekturzustand (vgl. 25) gesteuert wird.

4. Verfahren nach einem der Ansprüche 1 bis 3,
**dadurch gekennzeichnet, dass** als Sensoren (12) Fototransistoren oder andere lichtsensitive Sensoren verwendet werden.

5. Verfahren nach einem der Ansprüche 1 bis 3,
**dadurch gekennzeichnet, dass** als Sensoren (12) Thermoelemente oder andere Temperatursensoren mit kleiner thermischen Zeitkonstante verwendet werden.

6. Verfahren nach einem der Ansprüche 1 bis 5,
**dadurch gekennzeichnet, dass** jeder Sensor (12) mit einem Spannungs/Frequenzwandler (21) verbunden wird,
und dass ein Frequenzsignalausgang (22) des Spannungs/Frequenzwandlers (21) über einen Optokoppler (23) mit der als Mikrokontroller ausgebildeten elektrischen Steuerung (24) verbunden wird.

7. Vorrichtung (1) zum Abtransport von Glasbehältern (2) aus einer Glasformmaschine mit einer Formstation zur Fertigstellung wenigstens eines Glasbehälters (2),
welche Vorrichtung eine Absetzplatte (4) enthält mit einer von Kühlluftbohrungen (6) durchdrungenen Absetzstelle (5), und einem Ausnehmermechanismus (3) zum Entnehmen des wenigstens einen Glasbehälters (2) aus der Formstation und Absetzen dieses Glasbehälters auf der Absetzstelle (5)
wobei jeder Absetzstelle (5) ein Sensor (12) zugeordnet ist, mit dem bei Anwesenheit eines Glasbehälters (2) auf der Absetzstelle (5) ein Anwesenheitssignal erzeugbar ist,
und wobei jeder Sensor (12) mit einer elektrischen Steuerung (24) verbunden ist, durch die bei detektierter Anomalie korrigierende Maßnahmen (vgl. 25) in der Glasformmaschine steuerbar sind,
**dadurch gekennzeichnet, dass** an jeder Absetzstelle (5) wenigstens ein Sensor (12) unterhalb einer oberen, mit den Glasbehältern (2) in Berührung tretenden Flächen der Absetzstelle (5) angeordnet ist,
und dass von jedem Glasbehälter (2) ausgehende elektromagnetische Strahlung (16) in wenigstens eine Bohrung (6; 34) in der Absetzplatte (4) einleitbar und von dem wenigstens einen Sensor empfangbar ist.

8. Vorrichtung nach Anspruch 7,
**dadurch gekennzeichnet, dass** die Sensoren (12) als Fototransistoren oder andere lichtsensitive Sensoren ausgebildet sind.

9. Vorrichtung nach Anspruch 8,
**dadurch gekennzeichnet, dass** die Sensoren (12) in einem Abstand (15) unterhalb der Absetzplatte (4) angeordnet sind.

10. Vorrichtung nach Anspruch 7 oder 8,
**dadurch gekennzeichnet, dass** der wenigstens eine Sensor (12) jeder Absetzstelle (5) in einem Kühlluft (7) zu den Kühlluftbohrungen (6) leitenden Kanal (8) angeordnet ist.

11. Vorrichtung nach Anspruch 10,
**dadurch gekennzeichnet, dass** der wenigstens eine Sensor (12) an einem Tragkörper (11) befestigt ist,
und dass der Tragkörper (11) über einen luftdurchlässigen Halter (10) an dem Kanal (8) abgestützt ist.

12. Vorrichtung nach Anspruch 7,
**dadurch gekennzeichnet, dass** die Sensoren (12) als Thermoelemente oder andere Temperatursensoren mit kleiner thermischen Zeitkonstante ausgebildet sind.

13. Vorrichtung nach Anspruch 12,
**dadurch gekennzeichnet, dass** jeder Sensor (12) in einer Bohrung (34) der Absetzplatte (4) angeordnet ist.

14. Vorrichtung nach Anspruch 13,
**dadurch gekennzeichnet, dass** die Bohrung als Gewindebohrung (34) ausgebildet ist, in die ein den Sensor (12) haltender Schraubstopfen (35) von einer Unterseite (13) der Absetzplatte (4) einschraubbar ist.

15. Vorrichtung nach Anspruch 14,
**dadurch gekennzeichnet, dass** der Schraubstopfen (35) eine axiale Durchbrechung (36) aufweist,
und dass in die Durchbrechung (36) von unten ein den Sensor (12) und seine Ausgleichsleitungen (37) tragender Tragstift (38) hineinragt.

16. Vorrichtung nach Anspruch 15,
**dadurch gekennzeichnet, dass** der Tragstift (38) über eine Fixiervorrichtung (39) in der axialen Durchbrechung (36) positioniert und lösbar fixiert ist.

17. Vorrichtung nach Anspruch 15 oder 16,
**dadurch gekennzeichnet, dass** der Sensor (12), der Tragstift (38) und der Schraubstopfen (35) in einem die Kühlluft (7) zu den Kühlluftbohrungen (6) leitenden Kanal (8) angeordnet sind.

18. Vorrichtung nach Anspruch 17,
**dadurch gekennzeichnet, dass** zwischen einem oberen Abschnitt des Tragstifts (38) und dem Schraubstopfen (35) ein Ringraum (41) besteht,
und dass in den Ringraum (41) wenigstens eine mit dem Kanal (8) verbundene Verbindungsöffnung (42) in einer Wand (43) des Schraubstopfens (35) mündet.

19. Vorrichtung nach einem der Ansprüche 7 bis 18,
**dadurch gekennzeichnet, dass** jeder Sensor (12) mit einem Spannungs/Frequenzwandler (21) verbunden ist,
und dass ein Frequenzsignalausgang (22) des Spannungs/Frequenzwandlers (21) über einen Optokoppler (23) mit der als Mikrokontroller ausgebildeten elektrischen Steuerung (24) verbunden ist.

20. Vorrichtung nach Anspruch 19,
**dadurch gekennzeichnet, dass** bei als Fototransistoren oder andere lichtintensive Sensoren ausgebildeten Sensoren (12) zwischen die Sensoren (12) und den Spannungs/Frequenzwandler (21) ein Spannungsteiler (20) eingeschaltet ist.

21. Vorrichtung nach Anspruch 19,
**dadurch gekennzeichnet, dass** bei als Thermoelemente oder andere Temperatursensoren mit kleiner thermischen Zeitkonstante ausgebildeten Sensoren (12) die Ausgleichsleitungen (37) mit Eingängen (44,45) eines Differenzverstärkers (46) verbunden sind,
dass ein Ausgang (47) des Differenzverstärkers (46) über einen Kondensator (48) mit einem Operationsverstärker (49) verbunden ist,
und dass ein Ausgang des Operationsverstärkers (49) mit einem Eingang des Spannungs/Frequenzwandlers (21) verbunden ist.

## Claims

1. Method for transporting glass containers (2) from a glassware forming machine, comprising the following steps:
(a) at least one glass container (2) is produced in a moulding station of the glassware forming machine,
(b) the at least one glass container (2) is removed from the moulding station by a take-out mechanism (3) and is set down at a set-down location (5) on a dead plate (4), which location is penetrated by cooling air bores (6),
(c) the at least one glass container (2) is removed from the dead plate (4) for further transport,
(d) a sensor (12) is allocated to each set-down location (5) and produces a presence signal when a glass container (2) is present on the set-down location (5),
(e) each sensor (12) is connected to an electrical controller (24) which controls corrective features in the glassware forming machine when an anomaly is detected by the sensors (12),
**characterised in that** at each set-down location (5) at least one sensor (12) is disposed beneath an upper surface of the set-down location (5) contacted by the glass containers (2),
and **in that** electromagnetic radiation (16) emanating from each glass container (2) is directed into at least one bore (6; 34) in the dead plate (4) and is received by the at least one sensor (12).

2. Method as claimed in Claim 1, **characterised in that** if a presence signal normally indicating the presence of a glass container (2) on the set-down location (5) remains absent during an operating cycle of the take-out mechanism (3), the glassware forming machine is controlled by the electrical controller (24) into an appropriate correction state (cf. 25).

3. Method as claimed in Claim 1, **characterised in that** if a presence signal indicating the presence of a glass container (2) on the set-down location (5) remains for longer than normal during an operating cycle of the take-out mechanism (3), the glassware forming machine is controlled by the electrical controller (24) into an appropriate correction state (cf. 25).

4. Method as claimed in any one of Claims 1 to 3, **characterised in that** phototransistors or other light-sensitive sensors are used as the sensors (12).

5. Method as claimed in any one of Claims 1 to 3, **characterised in that** thermocouples or other temperature sensors having a low thermal time constant are used as the sensors (12).

6. Method as claimed in any one of Claims 1 to 5, **characterised in that** each sensor (12) is connected to a voltage/frequency converter (21), and **in that** a frequency signal output (22) of the voltage/frequency converter (21) is connected via an optoelectronic coupler (23) to the electrical controller (24) formed as a microcontroller.

7. Device (1) for transporting glass containers (2) from a glassware forming machine having a moulding station for producing at least one glass container (2),
which device contains a dead plate (4) having a set-down location (5) penetrated by cooling air bores (6), and having a take-out mechanism (3) for removing the at least one glass container (2) from the moulding station and setting down this glass container on the set-down location (5),
wherein a sensor (12) is allocated to each set-down location (5) and can produce a presence signal when a glass container (2) is present on the set-down location (5), and wherein each sensor (12) is connected to an electrical controller (24) which can control corrective features (cf. 25) in the glassware forming machine if an anomaly is detected,
**characterised in that** at each set-down location (5) at least one sensor (12) is disposed beneath an upper surface of the set-down location (5) contacting the glass containers (2),
and **in that** electromagnetic radiation (16) emanating from each glass container (2) can be directed into at least one bore (6; 34) in the dead plate (4) and can be
received by the at least one sensor.

8. Device as claimed in Claim 7, **characterised in that** the sensors (12) are formed as phototransistors or other light-sensitive sensors.

9. Device as claimed in Claim 8, **characterised in that** the sensors (12) are disposed at a spaced disposition (15) beneath the dead plate (4).

10. Device as claimed in Claim 7 or 8, **characterised in that** the at least one sensor (12) of each set-down location (5) is disposed in a channel (8) channelling cooling air (7) to the cooling air bores (6).

11. Device as claimed in Claim 10, **characterised in that** the at least one sensor (12) is attached to a supporting body (11), and **in that** the supporting body (11) is supported on the channel (8) via an air-permeable retainer (10).

12. Device as claimed in Claim 7, **characterised in that** the sensors (12) are formed as thermocouples or other temperature sensors having a low thermal time constant.

13. Device as claimed in Claim 12, **characterised in that** each sensor (12) is disposed in a bore (34) of the dead plate (4).

14. Device as claimed in Claim 13, **characterised in that** the bore is formed as a
threaded bore (34) into which a screw plug (35) retaining the sensor (12) can be screwed from a lower side (13) of the dead plate (4).

15. Device as claimed in Claim 14, **characterised in that** the screw plug (35) comprises an axial through hole (36), and **in that** a supporting pin (38) supporting the sensor (12) and its compensating lines (37) protrudes into the through hole (36) from the lower side.

16. Device as claimed in Claim 15, **characterised in that** the supporting pin (38) is positioned and releasably attached in the axial through hole (36) via an attachment device (39).

17. Device as claimed in Claim 15 or 16, **characterised in that** the sensor (12), the supporting pin (38) and the screw plug (35) are disposed in a channel (8) channelling the cooling air (7) to the cooling air bores (6).

18. Device as claimed in Claim 17, **characterised in that** an annular chamber (41) is located between an upper portion of the supporting pin (38) and the screw plug (35), and **in that** in the annular chamber (41) at least one connection opening (42) connected to the channel (8) opens in a wall (43) of the screw plug (35).

19. Device as claimed in any one of Claims 7 to 18, **characterised in that** each sensor (12) is connected to a voltage/frequency converter (21), and **in that** a frequency signal output (22) of the voltage/frequency converter (21) is connected via an optoelectronic coupler (23) to the electrical controller (24) formed as a microcontroller.

20. Device as claimed in Claim 19, **characterised in that** when the sensors (12) are formed as phototransistors or other light-sensitive sensors, a voltage divider (20) is connected between the sensors (12) and the voltage/frequency converter (21).

21. Device as claimed in Claim 19, **characterised in that** when the sensors (12) are formed as thermocouples or other temperature sensors having a low thermal time constant, the compensation lines (37) are connected to inputs (44, 45) of a differential amplifier (46), **in that** an output (47) of the differential amplifier (46) is connected to an operational amplifier (49) via a capacitor (48), and **in that** an output of the operational amplifier (49) is connected to an input of the voltage/frequency converter (21).

## Revendications

1. Procédé pour évacuer des récipients en verre (2) d'une machine à mouler le verre, comprenant les étapes suivantes :
(a) au moins un récipient en verre (2) est fini dans un poste de moulage de la machine à mouler le verre,
(b) le récipient en verre (2) au nombre d'un au moins est retiré du poste de moulage par un mécanisme extracteur (3) et déposé sur un emplacement de pose (5) d'une plaque de pose (4) traversé par des alésages pour de l'air de refroidissement (6),
(c) le récipient en verre (2) au nombre d'un au moins est enlevé de la plaque de pose (4) pour la poursuite du transport,
(d) chaque emplacement de pose (5) est associé à un capteur (12) qui génère, en présence d'un récipient en verre (2) sur l'emplacement de pose (5), un signal de présence et
(e) chaque capteur (12) communique avec une commande électrique (24) qui commande les mesures correctives à prendre au niveau de la machine à mouler le verre en cas d'anomalie détectée par les capteurs (12),
**caractérisé en ce qu'**il est prévu à chaque emplacement de pose (5) au moins un capteur (12) en dessous d'une surface supérieure de l'emplacement de pose (5) venant en contact avec les récipients en verre (2)
et **en ce qu'**un rayonnement électromagnétique (16) issu de chaque récipient en verre (2) passe dans au moins un alésage (6 ; 34) de la plaque de pose (4) et est capté par le capteur (12) au nombre d'un au moins.

2. Procédé selon la revendication 1, **caractérisé en ce que** si le signal de présence indiquant normalement la présence d'un récipient en verre (2) sur l'emplacement de pose (5) est absent pendant un cycle de travail du mécanisme extracteur (3), la machine à mouler le verre est amenée dans un état de correction adéquat (cf. 25) par la commande électrique (24).

3. Procédé selon la revendication 1, **caractérisé en ce que** si le signal d'activité indiquant la présence d'un récipient en verre (2) à l'emplacement de pose (5) dure plus longtemps que la normale pendant un cycle de travail du mécanisme extracteur (3), la machine à mouler le verre est amenée dans un état de correction adéquat (cf. 25) par la commande électrique (24).

4. Procédé selon l'une des revendications 1 à 3, **caractérisé en ce que** les capteurs (12) sont des phototransistors ou d'autres capteurs photosensibles.

5. Procédé selon l'une des revendications 1 à 3, **caractérisé en ce que** les capteurs (12) sont des thermocouples ou d'autres capteurs de température à basse constante de temps thermique.

6. Procédé selon l'une des revendications 1 à 5, **caractérisé en ce que** chaque capteur (12) est relié à un convertisseur tension/fréquence (21) et **en ce qu'**une sortie de signal de fréquence (22) du convertisseur tension/fréquence (21) est reliée par un optocoupleur (23) à la commande électrique (24) conçue comme un microcontrôleur.

7. Dispositif (1) pour évacuer des récipients en verre (2) d'une machine à mouler le verre possédant un poste de moulage pour la finition d'au moins un récipient en verre (2),
lequel dispositif possède une plaque de pose (4) avec un emplacement de pose (5) traversé par des alésages pour de l'air de refroidissement (6), et un mécanisme extracteur (3) pour retirer le récipient en verre (2) au nombre d'un au moins du poste de moulage et déposer ce récipient en verre sur l'emplacement de pose (5),
dans lequel chaque emplacement de pose (5) est associé à un capteur (12) qui génère un signal de présence lorsqu'un récipient en verre (2) est présent sur l'emplacement de pose (5),
et dans lequel chaque capteur (12) communique avec une commande électrique (24) qui commande les mesures correctives à prendre au niveau de la machine à mouler le verre en cas d'anomalie détectée par les capteurs (12),
**caractérisé en ce qu'**il est prévu à chaque emplacement de pose (5) au moins un capteur (12) en dessous d'une surface supérieure de l'emplacement de pose (5) venant en contact avec les récipients en verre (2),
et **en ce qu'**un rayonnement électromagnétique (16) issu de chaque récipient en verre (2) passe dans au moins un alésage (6 ; 34) de la plaque de pose (4) et peut être capté par le capteur au nombre d'un au moins.

8. Procédé selon la revendication 7, **caractérisé en ce que** les capteurs (12) sont des phototransistors ou d'autres capteurs photosensibles.

9. Dispositif selon la revendication 8, **caractérisé en ce que** les capteurs (12) sont disposés à distance (15) en dessous de la plaque de pose (4).

10. Dispositif selon la revendication 7 ou 8, **caractérisé en ce que** le capteur (12) au nombre d'un au moins de chaque emplacement de pose (5) est disposé dans un canal (8) amenant de l'air de refroidissement (7) aux alésages pour l'air de refroidissement (6).

11. Dispositif selon la revendication 10, **caractérisé en ce que** le capteur (12) au nombre d'un au moins est fixé sur un élément de support (11) et **en ce que** l'élément de support (11) est soutenu sur le canal (8) par une fixation (10) laissant passer l'air.

12. Dispositif selon la revendication 7, **caractérisé en ce que** les capteurs (12) sont conformés comme des thermocouples ou d'autres capteurs de température à basse constante de temps thermique.

13. Dispositif selon la revendication 12, **caractérisé en ce que** chaque capteur (12) est disposé dans un alésage (34) de la plaque de dépose (4).

14. Dispositif selon la revendication 13, **caractérisé en ce que** l'alésage est conformé comme un alésage fileté (34) dans lequel un bouchon fileté (35) retenant le capteur (12) peut être vissé depuis une face inférieure (13) de la plaque de pose (4).

15. Dispositif selon la revendication 14, **caractérisé en ce que** le bouchon fileté (35) possède une ouverture axiale (36) et **en ce qu'**une goupille de support (38) portant le capteur (12) et ses lignes d'équilibrage (37) dépasse dans l'ouverture (36).

16. Dispositif selon la revendication 15, **caractérisé en ce que** la goupille de support (38) peut être positionnée et fixée de manière amovible dans l'ouverture axiale (36) par un dispositif de fixation (39).

17. Dispositif selon la revendication 15 ou 16, **caractérisé en ce que** le capteur (12), la goupille de support (38) et le bouchon fileté (35) sont disposés dans un canal (8) amenant l'air de refroidissement (7) aux alésages pour l'air de refroidissement (6).

18. Dispositif selon la revendication 17, **caractérisé en ce qu'**il existe un espace annulaire (41) entre une partie supérieure de la goupille de support (38) et le bouchon fileté (35) et **en ce qu'**au moins une ouverture de communication (42) communiquant avec le canal (8) débouche dans une paroi (43) du bouchon fileté (35).

19. Dispositif selon l'une des revendications 7 à 18, **caractérisé en ce que** chaque capteur (12) est relié à un convertisseur tension-fréquence (21), et **en ce qu'**une sortie de signal de fréquence (22) du convertisseur tension-fréquence (21) est reliée par un optocoupleur (23) à la commande électrique (24) conçue comme un microcontrôleur.

20. Dispositif selon la revendication 19, **caractérisé en ce qu'**avec des capteurs (12) conçus comme des phototransistors ou autres capteurs à haute luminosité, un diviseur de tension (20) est intercalé entre les capteurs (12) et le convertisseur tension-fréquence (21)

21. Dispositif selon la revendication 19, **caractérisé en ce qu'**avec des capteurs (12) conçus comme des thermocouples ou autres capteurs thermiques à basse constante de temps thermique, les lignes d'équilibrage (37) sont reliées à des entrées (44, 45) d'un amplificateur différentiel, **en ce qu'**une sortie (47) de l'amplificateur différentiel (46) communique par l'intermédiaire d'un condensateur (48) avec un amplificateur opérationnel (49), et **en ce qu'**une sortie de l'amplificateur opérationnel (49) communique avec une entrée du convertisseur tension-fréquence (21).
